# EUROPEAN PATENT APPLICATION

(11) **EP 1 978 063 A1**
(43) Date of publication of application: **08.10.2008**
(21) Application number: 07105711.1
(22) Date of filing: 05.04.2007
(51) Int. Cl.: C09D 5/00, C09D 5/02, C09D 7/12, C09D 7/14, D21H 19/38

(54) **An aqueous hydrophobic coating composition comprising a fatty acid or a salt thereof**

(71) Applicant: YKI, Ytkemiska Institutet AB, 11486 Stockholm (SE)
(72) Inventor: Fogden, Andrew, Cook, Australian Capital Territory 2614 (AU); Vyörykkä, Jouko, 8805, Richterswil (CH); Corkery, Robert, 117 27, STOCKHOLM (SE)
(74) Representative: Holmberg, Martin Tor

(57) **Abstract**

There is disclosed an aqueous dispersion to be used in the manufacture of a hydrophobic coating, wherein said aqueous dispersion comprises: inorganic particles, at least one fatty acid or a salt thereof, a polymeric binder, and water. There is further disclosed a method for preparing an aqueous dispersion and a method of coating a substrate. There is also disclosed a subject coated with the method. The coating can be applied in one step, it is non-toxic, safe for food packaging, and relatively environmentally friendly as well as inexpensive.

## Description

### Technical field of the invention

The present invention relates to the field highly hydrophobic and superhydrophobic coatings.

### Background of the invention

Hydrophobic, highly hydrophobic and superhydrophobic coatings can be used for many kinds of surfaces. In the art many approaches have been used to manufacture highly hydrophobic coatings.

US 2006/0141223 A1 relates to textile sheet-like constructions having enhanced watertight properties and to a process for producing them. This fiber modification process requires solvent.

WO 2001/062863 A1 relates to an aqueous laquer dispersion suitable for hydrophobic coatings. The material is mainly carboxylated polystyrene pigments, wherein part of the carboxylic groups are esterified with fluorinated aliphatic alcohols.

US 2006/0257643 A1 describes a method of producing hydrophobic composites and aggregates. The process requires several process steps and is not suited to preparing continuous coatings.

The published French patent application FR 2 852 966 discloses an aqueous composition for treating surfaces and making them superhydrophobic, comprising a thermoplastic polymer in an aqueous emulsion and mineral particles having a size from 5 to 500 µm. The mineral can be for instance calcium carbonate, quartz, mica, talc, titanium dioxide, barium sulphate, calcium sulphate etc. The polymer can be for instance polystyrene, polymethacrylate, polyvinyl butyral, and polyurethane.

US 6,712,932 discloses a paper or a paper-like material with a structure, comprising particles of, for instance, metal oxides and carbonates, which are fixed to the paper by means of a wet-laying method using a binder together with a water-repelling agent.

US 6,660,363 discloses a self-cleaning surface comprising elevations made of hydrophobic polymers or permanently hydrophobized materials.

US2005/0136217 A1 discloses a self-cleaning object with a layer of hydrophobic material having protrusions and recesses, which layer is applied with a solution, dispersion or emulsion containing hydrophobic material and a liquid where the liquid is evaporated. The mixture may also comprise other solid particles.

US 2006/0257643 discloses hydrophobic composites, particularly hydrophobic particulates and free-flowing aggregates and methods utilizing the same.

Highly hydrophobic wet-laid coatings may be divided into two main types of coating treatments, either solvent-borne or water-borne. Solvent-borne treatments are subject to controls or regulatory limitations in some countries. On the other hand, water-borne coating treatments are usually more difficult to implement in order to obtain hydrophobic coatings and thus more limited than solvent-borne coating treatments, due to the dual requirement for a stable coating dispersion in the aqueous phase and for hydrophobicity in the dry state of the final coating layer. In particular, the application of the superhydrophobic coating often involves multiple steps by creating surface structure and low surface energy coating in different steps. Moreover, standard oil-in-water emulsion-based strategies for encapsulating and delivering hydrophobic species tend to leave an emulsifier (e.g. surfactant) on the coated surface upon drying, which in turn tends to enhance wetting.

Other disadvantages of prior art methods is that they may involve toxic components, that coatings may be made of expensive materials and cannot easily be applied to for instance paper using existing processes and equipment. Other problems in the prior art related to highly hydrophobic coatings include the use of silane treated and/or fluorinated components, which are expensive and may have negative impact on environment in both producing the components and during the life cycle of the coatings containing these components. Another problem in the prior art is that hydrophobic coatings require multiple steps for the application, which often leads to use of more material and a more complicated process for the application. Thus there is a need for an alternative coating composition, which would be effective in rendering surfaces hydrophobic without having the above-mentioned drawbacks.

### Summary of the invention

The present invention relates to an aqueous dispersion to be used in the manufacture of a hydrophobic coating, said aqueous dispersion comprises inorganic particles, at least one fatty acid or a salt thereof, a polymeric binder, and water.

The present invention moreover relates to a method for preparing an aqueous dispersion comprising the step of mixing an aqueous dispersion of a polymeric binder with a mixture of inorganic particles and at least one fatty acid or a salt thereof.

The present invention further relates to a method for coating a substrate comprising contacting said substrate with an aqueous dispersion according to the invention.

The present invention further relates to objects and substrates coated according to the present method.

Further embodiments of the present invention are defined in the appended dependent claims, which are specifically incorporated by reference herein.

It is one object of the present invention to obviate at least some of the disadvantages in the prior art and provide an improved method for coating an object with a hydrophobic coating, and provide an aqueous dispersion and objects coated with the improved method. Thus advantages of the present invention include that the coating can be applied in one step, it is non-toxic, safe for food packaging, and relatively environmentally friendly and inexpensive. A further advantage is that existing industrial coating processes can be used for applying the coating. Another advantage is that it is possible to obtain highly hydrophobic or superhydrophobic coatings without silanes or fluorinated components.

### Definitions

Before the invention is disclosed and described in detail, it is to be understood that this invention is not limited to particular configurations, process steps and materials disclosed herein as such configurations, process steps and materials may vary somewhat. It is also to be understood that the terminology employed herein is used for the purpose of describing particular embodiments only and is not intended to be limiting since the scope of the present invention is limited only by the appended claims and equivalents thereof.

It must be noted that, as used in this specification and the appended claims, the singular forms "a", "an" and "the" include plural referents unless the context clearly dictates otherwise.

The term "about" as used in connection with a value throughout the description and the claims means that the true value can be up to 10% higher or down to 10% lower than the indicated value.

If nothing else is defined, any terms and scientific terminology used herein are intended to have the meanings commonly understood by those of skill in the art to which this invention pertains.

The following terms are used throughout the description and the claims.

"Acicular" is used herein to denote a needle-like shape.

"Antioxidant" as used herein denotes a substance capable of preventing, slowing down, or suppressing oxidation.

"Apparent density" as used herein denotes dry mass per unit volume of a material including voids inherent in the material.

"Aqueous dispersion" as used herein encompasses a mixture comprising water.

"Base" as used herein denotes a functional group with the ability to take up a proton.

"Biocide" as used herein denotes a substance capable of preventing, slowing down, or suppressing growth of living organisms.

"Coalescence agent" as used herein denotes an agent that causes or promotes coalescence.

"Crosslinks" as used herein denotes any bonds linking one polymer chain to another.

"D₅₀" as used herein denotes the 50^{th} percentile of the mass-weighted size distribution of particles. Accordingly 50 % of the inorganic particles have a size greater than D₅₀ and 50 % of the inorganic particles have a size of less than D₅₀. The particle size is determined for the primary particles if the particles are not aggregated in larger agglomerates, but if the particles are aggregated in larger agglomerates the size of the agglomerates is measured.

"Defoaming agents" as used herein denotes a substance capable of preventing, slowing down, or suppressing foaming.

"Inorganic particle" as used herein denotes a particle comprising inorganic material, although small amounts of organic material may be present.

"Fungicide" as used herein denotes a substance capable of preventing, slowing down, or suppressing growth of fungi.

"Highly hydrophobic" is used herein to denote a surface with an equilibrium contact angle between 120 degrees and 150 degrees for a drop of water on the surface.

"Hydrophobic" as used herein denotes the property to repel water. A hydrophobic surface is a surface with a contact angle of more than 90 degrees but less than 120 degrees.

"Inorganic particle" as used herein encompasses an inorganic particle of any shape.

"Optical brighteners" as used herein denotes dyes that absorb light in the ultraviolet and violet region of the electromagnetic spectrum and re-emit light in the blue region.

"Polymeric binder" as used herein denotes a binder that is a polymer.

"Rheology modifiers" as used herein denotes a substance with the capability to modify rheological properties of a fluid.

"Scalenohedral" as used herein denotes a pyramidal form under the rhombohedral system, enclosed by twelve faces, each a scalene triangle.

"Substance" as used herein denotes a pure or a non-pure chemical compound or a mixture of chemical compounds, thus a for instance mineral is encompassed within the term.

"Superhydrophobic" as used herein denotes a surface with an equilibrium contact angle higher than 150 degrees for a drop of water on the surface.

### Detailed description of the invention

According to the present invention there is provided an aqueous dispersion to be used in the manufacture of a hydrophobic coating, said aqueous dispersion comprises: inorganic particles, at least one fatty acid or a salt thereof, a polymeric binder, and water.

The amounts of the components in the aqueous dispersion are
• from about 20 to about 55 wt%, preferably from about 30 to about 45 wt%, most preferably from about 30 to about 40 wt% of inorganic particles,
• from about 0.1 to about 2 wt%, preferably from about 0.5 to about 1 wt%, most preferably from about 0.7 to about 0.8 wt% of at least one fatty acid or a salt thereof, and
• from about 5 to about 20 wt%, preferably from about 8 to about 15 wt%, most preferably from about 10.5 to about 12 wt% of a polymeric binder,
• the rest being water and optional additives.

The inorganic particles according to the present invention have an apparent density from about 0.30 g/ml to about 4 g/ml, a BET specific surface area from about 1 to 20 m²/g, and a D₅₀ less than about 20 µm.

In one embodiment of the present invention the inorganic particles the following properties:
• Apparent density from about 0.30 g/ml to about 2.7 g/ml, preferably from about 0.30 g/ml to about 0.80 g/ml and most preferably about 0.30 g/ml to about 0.65 g/ml.
• BET specific surface area from about 1 to 20 m²/g, preferably more than about 3 m²/g and more preferably more than 5 m²/g.
• D₅₀ less than about 20 µm, preferably from about 1 to about 10 µm, most preferably from about 2 to 5µm.

In an alternative embodiment, of the present invention the inorganic particles the following properties:
• Apparent density from about 1 g/ml to about 4 g/ml, preferably from about 2 to about 3.5 g/ml and most preferably about 2.5 g/ml to about 2.9 g/ml.
• BET specific surface area from about 1 to 20 m²/g, preferably more than about 6 m²/g and more preferably more than 9 m²/g.
• D₅₀ less than about 10 µm, preferably from about 0.1 to about 5 µm, most preferably from about 0.2 to 2µm.

The inorganic particles used in the present invention may comprise a mixture of different inorganic particles with different properties.

The inorganic particles used in the invention are preferably basic. Either the inorganic particles can be intrinsically basic or alternatively they may be treated to obtain basic functional groups on the surface. If the method uses non-basic inorganic particles it is preferred to treat the inorganic particles so that they exhibit basic groups on the surface. Examples of such treatment include contacting said inorganic particles with an aqueous solution of at least one hydrolysable polyvalent metal salt, followed by neutralisation. The treatment is preferably carried out before the fatty acid or salt thereof is coated on the inorganic particles.

The inorganic particles used in the present invention in one embodiment comprise at least one substance selected from the group consisting of calcium carbonate and kaolin.

The inorganic particles used in the present invention in one embodiment comprise at least one substance selected from the group consisting of anatase, calcinated clay, kaolin, and talc, the surface of which has been made basic.

The inorganic particles used in the present invention in one embodiment comprise at least one substance selected from the group consisting of aluminium hydroxide, aragonite, barium sulphate, calcite, calcium sulphate, dolomite, magnesium hydroxide, magnesium carbonate, magnesite, titanium dioxide (rutile), and vaterite.

The inorganic particles used in the present invention in one embodiment comprise at least one substance selected from the group consisting of zincite, corundum, hematite, magnetite, ilmenite, and cassiterite.

The inorganic particles used in the present invention in one embodiment comprise at least one substance selected from the group consisting of dispore, boehmite, goethite, lepidocrocite, rhodocrosite, siderite, baryte, strontianite, apatite, feldspar and fluorite.

The inorganic particles used in the present invention in one embodiment comprise SiO₂.

Other examples of inorganic particles include at least one substance selected from the group consisting of anatase, calcinated clay, kaolin, and talc, wherein the surface of said inorganic particles has been made basic. If the particles are not intrinsically basic they need to be treated by any suitable method to make them basic.

The inorganic particles are preferably calcium carbonate particles, more preferably precipitated calcium carbonate and most preferably aragonite.

The inorganic particles are surface treated with a fatty acid or a salt thereof. Advantages of using one or more fatty acids are that fatty acids are inexpensive compared to silanes and fluorinated polymers and are readily available and used in many industries. Fatty acids interact in a suitable way with inorganic particles such as calcium carbonate and many fatty acids are approved for contact with food. The inorganic particles are coated by contacting them with an aqueous solution or dispersion comprising a fatty acid or a salt thereof. The aqueous solution or dispersion can be the same as the aqueous dispersion that comprises the binder. Alternatively the coating can be performed in a separate aqueous solution or dispersion. Preferably the coating of the inorganic particles is performed in a separate aqueous solution or dispersion. The inorganic particles can optionally be coated with several different fatty acids of salts thereof, optionally in several steps. The fatty acid or salt thereof forms a layer on the entire inorganic particle surface; alternatively the fatty acid or salt thereof forms a layer on a part of the surface. Optionally the coating comprises surfactants. The amount of fatty acid or salt thereof should be high enough so that the inorganic particles become dispersible in water. A suitable amount of fatty acid generally corresponds to a double layer of molecules on the surface of the inorganic particles. Thus the inorganic particles become dispersible in water or alternatively the ability to be dispersed in water is improved.

In one particularly preferred embodiment inorganic particles comprising calcium carbonate, are treated with stearic acid.

Inorganic particles with relatively poor packing are preferred, which yields a suitable roughness of the coating. Inorganic particles with narrow particle size distribution are also preferred, possibly combined with a tendency to aggregate to larger secondaries. Preferably the inorganic particles are acicular or scalenohedral. The shape of the particles is however not limited to these two shapes. Also other thorny, spiky and needle like shapes are preferred for use according to the present invention. Other possible shapes include chestnut husk shapes.

Particles with a preferred shape have small size, low density and high specific surface.

Preferably inorganic particles without any appreciable residues of dispersants are used. Examples of such undesired dispersants include sodium polyacrylate polymers and copolymers.

Acicular aragonite is one preferred choice for the inorganic particles, especially acicular aragonite with a D₅₀ from about 0.1 to about 20 µm, preferably from about 0.2 to about 10 µm. In alternative embodiments, a combination of PCC (precipitated calcium carbonate) or GCC (ground calcium carbonate) products having different particle size distributions is used.

A saturated or unsaturated fatty acid or salt thereof is used. A fatty acid or salt thereof with linear or branched hydrocarbon chain is used. Preferably the fatty acid or salt thereof has 8 to 22, more preferably 10 to 18 carbon atoms. Particularly preferred fatty acids are selected from the group consisting of oleic acid, stearic acid and palmitic acid. Also preferred are salts of the latter fatty acids. The counter ions of a fatty acid salt can be any suitable ion. Examples include a sodium ions and ammonium ions, which are common and inexpensive salts.

Examples of preferred binders include carboxylated latex, styrene-butadiene latex and styrene acrylate. Such carboxylated latex is a latex or emulsion polymer stabilised predominantly by carboxylation. Preferably the glass transition temperature of the binder is in the range from about -40 to about 50°C, and more preferably from about 0 to about 50°C. Examples of a polymeric binder include commercially available binders supplied by Dow Chemical Company under the trade name DL 940 or experimental latex Dow/HPQ73 or by Rhodia under the trade name Ultradia 7100, 7300 or 7400.

A synthetic latex, as is well known, is an aqueous dispersion of polymer particles prepared by emulsion polymerization of one or more monomers.

The monomer composition employed in the preparation of the latex comprises from about 10 to 95 pphm of a first monomer (A), from about 40 to 90 pphm of a second monomer (B), and from 0 to about 5 pphm of a functional monomer (C). As used herein, the term "pphm" means parts per hundred monomer, a term well known to those skilled in the art. Accordingly, the total parts monomer employed is 100 parts monomer, on a weight basis.

The first monomer (A) is a low Tg monomer comprising an alkyl acrylate or butadiene. The low Tg monomer is used in amounts of from about 10 pphm to about 95 pphm, preferably 15 pphm to 40 pphm. Examples of low Tg monomers include monomers having a Tg of less than 10°C that are C₁ -C₁₀ alkyl esters of acrylic acid, C₂ -C₁₀ alkyl esters of alpha, beta-ethylenically unsaturated C₄ -C₆ monocarboxylic acids, C₄ -C₁₀ dialkyl esters of alpha, beta-ethylenically unsaturated C₄ -C₈ dicarboxylic acids, and vinyl esters of carboxylic acids, including, without limitation, vinyl isobutyrate, vinyl-2-ethyl-hexanoate, vinyl propionate, vinyl isooctanoate and vinyl versatate and butadiene. The low Tg monomer can be selected from the group consisting of C₁-C₁₀ alkyl esters of (meth)acrylic acid, i.e. alkyl (meth)acrylates, and C₄ -C₈ dialkyl esters of maleic, itaconic and fumaric acids. Preferably, at least one C₂ -C₈ alkyl ester of acrylic acid is utilized. Particularly preferred low Tg monomers include ethyl acrylate, butyl acrylate, 2-ethyl hexyl acrylate, decyl acrylate, dibutyl maleate, dioctyl maleate, and butadiene with butadiene being most preferred. Mixtures of first monomers can be employed.

The second monomer (B) is a high Tg monomer having a Tg greater than 10°C such as, for example, vinyl esters of carboxylic acids, the acid having from two to about 13 carbon atoms and styrene. Representative high Tg comonomers include methyl methacrylate, dimethyl maleate, t-butyl methacrylate, t-butyl isobornyl acrylate, phenyl methacrylate, acrylonitrile and vinyl esters of carboxylic acids having Tg of greater than 10°C and styrene.
Examples of such vinyl esters include vinyl pivalate, vinyl neodecanoate, vinyl neononanoate, and mixtures of branched vinyl esters such as the commercially available VeoVa 11 and EXXAR Neo-12. The second monomer advantageously is employed in an amount of from about 40 pphm to about 90 pphm, preferably 60 pphm to 85 pphm. Mixtures of high Tg comonomers can be employed.

It may also be desired to incorporate in the binder polymer minor amounts of one or more functional comonomers (C). Suitable copolymerizable comonomers (C) include, for example: acrylic acid; methacrylic acid; itaconic acid; fumaric acid ; the half esters of maleic acid, such as monoethyl, monobutyl or monooctyl maleate; acrylamide; tertiary octylacrylamide; N-methylol (meth)acrylamide; N-vinylpyrrolidinone; diallyl adipate; triallyl cyanurate; butanediol diacrylate; allyl methacrylate; etc.; as well as C₂ -C₃ hydroxyalkyl esters such as hydroxyethyl acrylate, hydroxy propyl acrylate and corresponding methacrylates. The comonomer (C) generally is used at levels of less than 5 pphm, preferably less than 2.5 pphm, depending upon the nature of the specific comonomer. Mixtures of comonomer (C) can be employed.

In addition, certain copolymerizable monomers that assist in the stability of the binder, e.g., vinyl sulfonic acid, sodium vinyl sulfonate, sodium styrene sulfonate, sodium allyl ether sulfate, sodium 2-acrylamide-2-methyl-propane sulfonate (AMPS), 2-sulfoethyl methacrylate, and 2-sulfopropyl methacrylate, can be employed as emulsion stabilizers. These optional monomers, if employed, are added in very low amounts of from 0.1 pphm to about 2 pphm.

Methods for preparing synthetic latexes are well known in the art and any of these procedures can be used.

Suitable free radical polymerization initiators are the initiators known to promote emulsion polymerization and include water-soluble oxidizing agents, such as, organic peroxides (e.g., t-butyl hydroperoxide, cumene hydroperoxide, etc.), inorganic oxidizing agents (e.g., hydrogen peroxide, potassium persulfate, sodium persulfate, ammonium persulfate, etc.) and those initiators that are activated in the water phase by a water-soluble reducing agent. Such initiators are employed in an amount sufficient to cause polymerization. As a general rule, a sufficient amount is from about 0.1 to about 5 pphm. Alternatively, redox initiators may be employed, especially when polymerization is carried out at lower temperatures. For example, reducing agents may be used in addition to the persulfate and peroxide initiators mentioned above. Typical reducing agents include, but are not limited to: alkali metal salts of hydrosulfites, sulfoxylates, thiosulfates, sulfites, bisulfites, reducing sugars such as glucose, sorbose, ascorbic acid, erythorbic acid, and the like. In general, the reducing agents are used at levels from about 0.01 pphm to about 5 pphm.

The emulsifying agents are those generally used in emulsion polymerization. The emulsifiers can be anionic, cationic, surface-active compounds or mixtures thereof.

Suitable nonionic emulsifiers include polyoxyethylene condensates. Exemplary polyoxyethylene condensates that can be used include polyoxyethylene aliphatic ethers, such as polyoxyethylene lauryl ether and polyoxyethylene oleyl ether; polyoxyethylene alkaryl ethers, such as polyoxyethylene nonylphenol ether and polyoxyethylene octylphenol ether; polyoxyethylene esters of higher fatty acids, such as polyoxyethylene laurate and polyoxyethylene oleate, as well as condensates of ethylene oxide with resin acids and tall oil acids; polyoxyethylene amide and amine condensates such as N-polyoxyethylene lauramide, and N-lauryl-N-polyoxyethylene amine and the like; and polyoxyethylene thio-ethers such as polyoxyethylene n-dodecyl thio-ether.

Nonionic emulsifying agents that can be used also include a series of surface active agents available from BASF under the PLURONIC and TETRONIC trade names. In addition, a series of ethylene oxide adducts of acetylenic glycols, sold commercially by Air Products under the SURFYNOL trade name, are suitable as nonionic emulsifiers.

Representative anionic emulsifiers include the alkyl aryl sulfonates, alkali metal alkyl sulfates, the sulfonated alkyl esters, and fatty acid soaps. Specific examples include sodium dodecylbenzene sulfonate, sodium butylnaphthalene sulfonate, sodium lauryl sulfate, disodium dodecyl diphenyl ether disulfonate, N-octadecyl sulfosuccinate and dioctyl sodiumsulfosuccinate. The emulsifiers are employed in amounts effective to achieve adequate emulsification of the polymer in the aqueous phase and to provide desired particle size and particle size distribution.

Other ingredients known in the art to be useful for various specific purposes in emulsion polymerization, such as, acids, salts, chain transfer agents, chelating agents, buffering agents, neutralizing agents, defoamers and plasticizers also may be employed in the preparation of the polymer. For example, if the polymerizable constituents include a monoethylenically unsaturated carboxylic acid monomer, polymerization under acidic conditions (pH 2 to 7, preferably 2 to 5) is preferred. In such instances the aqueous medium can include those known weak acids and their salts that are commonly used to provide a buffered system at the desired pH range.

Various protective colloids may also be used in place of or in addition to the emulsifiers described above. Suitable colloids include casein, hydroxyethyl starch, carboxyxethyl cellulose, carboxymethyl cellulose, hydroxyethylcellulose, gum arabic, alginate, poly(vinyl alcohol), polyacrylates, polymethacrylates, styrene-maleic anhydride copolymers, polyvinylpyrrolidones, polyacrylamides, polyethers, and the like, as known in the art of emulsion polymerization technology. In general, when used, these colloids are used at levels of 0.05 to 10% by weight based on the total weight of the reactor contents.

The manner of combining the polymerization ingredients can be by various known monomer feed methods, such as, continuous monomer addition, incremental monomer addition, or addition in a single charge of the entire amounts of monomers. The entire amount of the aqueous medium with polymerization additives can be present in the polymerization vessel before introduction of the monomers, or alternatively, the aqueous medium, or a portion of it, can be added continuously or incrementally during the course of the polymerization.

Final particle size of the latex can vary from 30nm to 1500nm.

The amount of binder must be high enough so that the coating exhibits the desired adhesion, mechanical strength and hydrophobicity, but on the other hand the amount of binder must not be too high so that the hydrophobicity of the coating is reduced by the binder submerging the inorganic particles. A person skilled in the art can in the light of this description adjust the amount of binder within the range of the appended claims.

The degree of carboxylation for carboxylated latex should be adapted relative to the amount of fatty acid in the coating composition. It is undesired that the total number of carboxyl groups of the binder is higher than the total number of carboxyl groups of the fatty acid. Therefore, in general, low-carboxylated latex should perform best for low amounts of fatty acid.

The process for making the above-defined coating composition can be carried out in several ways according to the present invention. The process comprises the step of mixing an aqueous solution of a polymeric binder and a mixture of fatty acid and inorganic particles. The process also comprises the step of coating the inorganic particles with a fatty acid. Said coating occurs in the mixture of fatty acid and inorganic particles.

Thus there is provided a method for preparing an aqueous dispersion comprising the step of mixing an aqueous dispersion of a polymeric binder with a mixture of inorganic particles and at least one fatty acid or a salt thereof.

In one embodiment the mixture of inorganic particles and at least one fatty acid or a salt thereof is prepared by
a) mixing said at least one fatty acid or a salt thereof with water,
b) mixing said inorganic particles with water, and then
c) mixing the mixtures from step a) and step b).

In an alternative embodiment said mixture of inorganic particles and at least one fatty acid or a salt thereof is prepared by
a)mixing at least one fatty acid or a salt thereof with water, and then
b)mixing the mixture from step a) with said inorganic particles.

In a preferred embodiment the polymeric binder is mixed with said inorganic particles at least 15 minutes after the mixing of said at least one fatty acid or a salt thereof with said inorganic particles.

Optionally the aqueous dispersion according to the present invention comprises surfactants. If a surfactant is used in the aqueous dispersion it can be added before, at the same time as, or after the fatty acid or salt thereof. An optional surfactant can also be added before, at the same time as, or after the polymeric binder. The surfactant is preferably chosen so that it does not adversely affect the coating. Cationic surfactants are less preferred. Examples of surfactants include phosphoric acid alkyl ester and diphosphonate surfactants, silicone based surfactants, fluorosurfactants, or salts thereof.

Optionally the aqueous dispersion comprises other additives. Examples of such additives include antioxidants, biocides, coalescence agents, coloured inorganic particles, crosslinkers, defoaming agents, dyes, coalescence agents, fungicides, lubricants, optical brighteners, rheology modifiers, or any combination thereof. Preferably such additives should be compatible with the other components of the aqueous dispersion.

The present invention provides a method for coating a substrate with a highly hydrophobic or superhydrophobic coating comprising: a) preparing an aqueous dispersion, b) contacting said substrate with said aqueous dispersion. Thereby the surface of a substrate is rendered hydrophobic, highly hydrophobic or superhydrophobic.

The aqueous dispersion as described above is contacted with the substrate to be coated. After contacting the substrate with the aqueous dispersion the substrate is dried. The thickness of the dried coating on the substrate is from about 3 to about 40µm, preferably from about 8 to about 25µm. The amount of polymeric binder depends on several variables including the surface area of the inorganic particles. The larger the surface area, the more polymeric binder is required for strength properties.

After the substrate has been contacted with the aqueous dispersion according to the present invention it can optionally be heated. Heating is particularly useful if a short drying time and high process speed is needed. The properties of the polymeric binder can be improved by curing by heat. If paper or paper-like material is the substrate, heating can be useful to decrease the water content of the coated paper. As an alternative to heating the object can be dried without additional heating. A combination of drying and heating can also be used.

The coating according to the present invention may be applied to a large variety of substrates.

According to the present invention there is provided objects coated with the method according to the present invention.

Coating for medical devices is possible.

Preferably the coating according to the present invention is highly hydrophobic, i.e. it displays an equilibrium contact angle between 120 degrees and 150 degrees. More preferably the contact angle is higher than 135 degrees.

Using the present invention it is even possible to manufacture superhydrophobic coatings, which display an equilibrium contact angle greater than 150 degrees.

Advantages of the present invention are that the coating can be applied in one step, it is non-toxic, approved for food contact, inexpensive and it can be produced in an environmentally friendly manner. A further advantage is that existing industrial coating processes can be used for applying the coating. Another advantage is that a hydrophobic surface is created without any need for stamping or etching.

It is to be understood that this invention is not limited to the particular embodiments shown here. The following examples are provided for illustrative purposes and are not intended to limit the scope of the invention since the scope of the present invention is limited only by the appended claims and equivalents thereof.

### Examples

The following methods apply to all examples mentioned below.

### Dry stain size measurement

In the stain test 5 drops of an exact amount (9µl, i.e. drop diameter 2.58 mm) of a blue dye aqueous solution are auto-pipetted (from a fixed height of 1.9 mm from drop bottom to coat surface) on the coated surface. The blue dye is added to aid visual inspection of stain size after complete evaporation of the water. The surface tension of the colored water is the same as the non-colored deionized water. The samples are stored at 23°C and 50% relative humidity, and the final size of the dry stain after complete evaporation is measured with a sliding gauge, both in machine direction MD and cross direction CD. The values given below correspond to the mean of the set of 5 drops measured in these two directions. They are expressed in a dimensionless form by dividing the stain diameter by the drop diameter prior to contact (i.e. 2.58 mm). This measure relates to the total ability of the substrate to resist both surface spreading and sub-surface penetration and spreading (within the top coating layer and layers below) over long times. A hydrophobic surface leads to a smaller stain diameter than the initial droplet diameter. This method can be used to rank the samples' performance regarding hydrophobicity.

### Initial contact angle measurement

Short-time contact angles of drops of deionized water (i.e. without the blue dye) on the coated sheets are measured manually with a Ramé-Hart goniometer, using the same autopipette, drop volume and procedure (i.e. 5 drops at different places) as in the staining experiments described above. The time from contact to measurement of advancing angle is approximately 10 s. This is a standard measure of short-term hydrophobicity, reflecting the ability of the substrate to reject water drops on first contact. The use of a manual goniometer is convenient because the drop can roll or hop on initial contact with a highly hydrophobic or superhydrophobic substrate.

### Rolling angle measurement

The drop rolling tests are performed using a tilt table. The same blue dye solution as mentioned above is autopipetted in a similar manner as in the stain test on the coated samples pre-inclined at 5 fixed angles (2.5, 5, 10, 15 and 20° from horizontal). The lowest angle for which free rolling occurs, i.e. the drop rolls the entire distance of the sample size (around 10 cm), is the value assigned to the substrate. Failure to roll freely at 20° is regarded as a no-score, despite the fact that free rolling may occur at higher angles not tested (e.g. approaching vertical). It is expected that drop rolling is closely dependent on advancing initial contact angle (see above).

### Example 1

Precipitated calcium carbonate (PCC) (Sturcal F, Specialty Minerals Inc.) (Particle size D₅₀ ca 2.5 µm, apparent density 0.32-0.43 g/ml, and BET surface area ca 6 m²/g) particles were mixed together with water and a sodium oleate solution in a glass beaker with a magnetic stirrer. The total content of calcium carbonate in water was 30 wt% and the content of sodium oleate was 1 wt% per pigment weight (dry on dry). This suspension was mixed until it was essentially homogenous. Further, 30 wt% per pigment weight (dry on dry) of commercially available styrene-butadiene (SB) latex (DL 940, The Dow Chemical Company) was added to the above-mentioned aqueous suspension containing sodium oleate and calcium carbonate. This suspension was again mixed with a magnetic stirrer to obtain an essentially homogenous mixture. The aqueous dispersion was coated on paper (Performa Natura, 255 g/m², Stora Enso). The coating was performed using a bench coater from RK Print-Coat Instruments Ltd. Several sheets of paper were coated and then dried in an oven at 70 °C for 2 minutes.

Water contact angle on coated paper was characterized by Ramé Hart goniometer. The analysis performed for coatings are explained thoroughly above. For the above-mentioned coating the contact angle was 140° and the normalized stain size was 1.0. The rms roughness of the coated substrate measured by Zygo white light interferometric profilometer (NewView 5010, Zygo Corporation) was below 1.2 µm for following length scales: 0-5 µm, 5-10 µm, 10-20 µm, 20-40 µm, 40-80 µm and 80-170 µm.

### Example 2

The formulation of Example 1 was modified by having 50 wt% per pigment weight of the same SB-latex binder (DL 940, The Dow Chemical Company) instead of 30 wt% per pigment weight as used in Example 1. The coating and the analysis were performed as in Example 1. For this coated substrate the contact angle was 120° and the normalized stain size was 1.4. The rms roughness measured by Zygo whitelight interferometric profilometer was below 1.2 µm for following length scales: 0-5 µm, 5-10 µm, 10-20 µm, 20-40 µm, 40-80 µm and 80-170 µm.

### Example 3

The formulation of Example 1 was modified by having 17 wt% per pigment of the same SB-latex binder (DL 940, The Dow Chemical Company) instead of 30 wt% per pigment as used in Example 1. The coating and the analysis were performed as in Example 1. For this coated substrate the contact angle was 145° and the normalized stain size was 2.5.

### Example 4

The formulation of Example 1 was modified by having 2 wt% per pigment weight of sodium oleate instead of 1 wt% per pigment weight as used in Example 1. The coating and the analysis were performed as in Example 1. For this coated substrate the contact angle was 142° and the normalized stain size was 0.8. Water droplets (9 µl) showed rolling at 15° inclination.

### Example 5

The formulation of Example 1 was modified by having 3 wt% per pigment weight of sodium oleate instead of 1 wt% per pigment weight as used in Example 1. The coating and the analysis were performed as in Example 1. For this formulation the contact angle was 154° and the normalized stain size was 0.8. Water droplets (9 µl) showed rolling at 10° inclination.

### Example 6

The formulation of Example 1 was modified by having 2 wt% per pigment weight of sodium oleate instead of 1 wt% per pigment weightas used in Example 1. Further, the formulation in Example 1 was modified by having 40 wt% per pigment weight of the same SB-latex binder (DL 940, The Dow Chemical Company) instead of 30 wt% per pigment. The coating and the analysis were performed as in Example 1. For this coated substrate the contact angle was 146° and the normalized stain size was 0.9. Water droplets (9 µl) showed rolling at 20° inclination.

### Example 7

The formulation of Example 1 was modified by changing the pigment to another type of PCC calcium carbonate, Sturcal H (Specialty Minerals Inc.). (Particle size D₅₀ 4.0 µm, apparent density 0.48-0.61 g/ml, and BET surface area ca 5 m²/g) Further, the formulation in Example 1 was modified by adding 2 wt% per pigment of sodium oleate instead of 1 wt% per pigment as used in Example 1. The coating and the analysis were performed as in Example 1. For this coated object the contact angle was 153° and the normalized stain size was 0.6. Water droplets (9 µl) showed rolling at 5° inclination.

### Example 8

The formulation of Example 7 was modified by changing the SB-latex binder to an experimental grade SB-latex (SB/HPQ73, The Dow Chemical Company). The SB-latex content was again 30 wt% per pigment weight. The coating was performed on commercially available paper (Cupforma Classic, 230 g/m², Stora Enso). Otherwise the coating and analysis was performed as in Example 1. For this coated substrate the contact angle was 143° and the normalized stain size was 0.6. Water droplets (9 µl) showed rolling at 10° inclination.

### Example 9

The formulation of Example 8 was modified by increasing the total solids content of the coating from 34 wt% to 51 wt%. Otherwise the coating and analysis were performed as in Example 8. For this coated substrate the contact angle was 160° and the normalized stain size was 0.5. Water droplets (9 µl) showed rolling at 2.5° inclination.

### Example 10

The formulation of Example 8 was modified by adding commercially available ammonium zirconium crosslinker (Allicross AZC-R, Allinova). The crosslinker content was 4 wt% dry based on dry binder weight. Otherwise the coating and analysis were performed as in Example 8. For this coated substrate the contact angle was 141° and the normalized stain size was 0.6. Water droplets (9 µl) showed rolling at 15° inclination.

### Example 11

The formulation of Example 9 was modified by changing the binder to the commercially available latex Rhodopas Ultradia 7100 (Rhodia). The binder content was 30 wt% per pigment weight (dry on dry). The coating and analysis were performed as in Example 8. For this coated substrate the contact angle was 155° and the normalized stain size was 0.6. Water droplets (9 µl) showed rolling at 2.5° inclination.

### Example 12

The formulation of Example 11 was modified by changing the binder to the commercially available latex Rhodopas Ultradia 7300 (Rhodia). The binder content was again 30 wt% per pigment weight. The coating and analysis were performed as in Example 8. For this coated substrate the contact angle was 154° and the normalized stain size was 0.6. Water droplets (9 µl) showed rolling at 10° inclination.

### Example 13

The formulation of Example 9 was modified by using diphosphonate alkyl surfactant instead of the sodium oleate. The content of diphosphonate alkyl surfactant was 1 wt% per pigment weight (dry on dry). The coating and analysis were performed as in Example 8. For this coated substrate the contact angle was 139° and the normalized stain size was 0.9.

### Example 14

The formulation of Example 13 was modified by changing the diphosphonate alkyl surfactant content to 2 wt% per pigment weight. The coating and analysis were performed as in Example 8. For this coated substrate the contact angle was 136° and the normalized stain size was 0.9.

### Example 15

The formulation of Example 8 was modified by changing the Sturcal H pigment to the PCC Opacarb A40 (Specialty Minerals Inc.) (Particle size D₅₀ 0.4 µm, density 0.48-0.61 g/ml, and BET surface area 12 m²/g). Opacarb was removed from the manufacturing process before the addition of dispersant, because the dispersant is unsuitable in the present formulation. The total solids content of the formulation was 30 wt%. The coating and analysis were performed as in Example 8. For this formulation the contact angle was 148° and the normalized stain size was 0.6. Water droplets (9 µl) showed rolling at 10° inclination.

### Example 16

Aluminium sulfate, Al₂(SO₄)₃.18H₂O was mixed together with water. This solution was mixed with kaolin (Kaolin C, ECC), (Particle size D₅₀ <2 µm, density 2.6 g/ml, and BET surface area 10 m²/g) stirring until it was essential homogenous. Then a 10% solution of sodium carbonate was added, and the mixture stirred until again homogenous. To this slurry a 5% solution of sodium oleate was added. The total content of kaolin in the aqueous dispersion was 29 wt%, the content of sodium oleate was 2.4 wt% per pigment weight (dry on dry), the content of sodium carbonate was 4.3 wt% on pigment (dry on dry), and the content of Al₂(SO₄)₃.18H₂O was 9.4 wt% per pigment weight (dry on dry).
The aqueous dispersion was coated on paperboard (Cupforma Classic, 230 g/m², Stora Enso). The coating was performed using a bench coater from RK Print-Coat Instruments Ltd. Several sheets of paper were coated and then dried in an oven at 90 °C for 2 minutes.

For the above-mentioned coating the contact angle with water was 132°.

### Example 17

To the aqueous dispersion from Example 16, a styrene-butadiene latex binder (HPQ 73, Dow Europe) was added, and the dispersion was stirred until homogeneous. The content of latex was 30 wt% per pigment weight(dry on dry). The coating and the analysis were performed as in Example 16. For this coated substrate the contact angle was 113°.

### Example 18

The formulation in Example 17 was modified by increasing the level of the latex HPQ73 to 30 wt% per pigment weight(dry on dry). The coating and the analysis were performed as in Example 16. For this coated substrate the contact angle was 90°.

### Example 19

Precipitated calcium carbonate (PCC) (Sturcal H, Specialty Minerals Inc.) (Particle size D₅₀ 4.0 µm, apparent density 0.48-0.61 g/ml, and BET surface area ca 5 m²/g) particles were mixed together with water and a sodium oleate solution in a glass beaker with a magnetic stirrer. The total content of calcium carbonate in water was 30 wt% and the content of sodium oleate was 2 wt% per pigment weight (dry on dry). This suspension was mixed until it was essentially homogenous and then added to the aqueous dispersion in Example 16 and again mixed until homogeneous. The resulting ratio of PCC pigment to clay pigment was 70% PCC and 30% clay. To this aqueous dispersion, a styrene-butadiene latex binder (HPQ 73, Dow Europe) was added, and the dispersion was stirred until homogeneous. The content of latex was 15 wt% per pigment weight (dry on dry). The coating and the analysis were performed as in Example 16. For this coated substrate the contact angle was 123°.

### Example 20

The formulation in Example 19 was modified by changing the ratio of PCC pigment to clay pigment to 50% PCC and 50% clay (dry on dry). The coating and the analysis were performed as in Example 16. For this coated substrate the contact angle was 115°.

### Example 21

The formulation of Example 1 was modified by having 2 wt% per pigment of sodium oleate instead of 1 wt% per pigment weight as used in Example 1. Further, the formulation in Example 1 was modified by having 30 wt% per pigment weight of another SB-latex binder (SHY-7, Dow Europe) instead of DL 940. The aqueous dispersion was coated on paperboard (Cupforma Classic, 230 g/m², Stora Enso). The coating was performed using a bench coater from RK Print-Coat Instruments Ltd. Several sheets of paper were coated and then dried in an oven at 90 °C for 2 minutes.
The coating and the analysis were performed as in Example 1. For this coated substrate the contact angle was 148° and the normalized stain size was 0.7. Water droplets (9 µl) showed rolling at 2.5° inclination.

### Example 22 (comparative, not according to the present invention)

A comparative formulation was prepared by utilising commercially available dispersant (Dispex N40, Ciba Specialty Chemicals). As particles, PCC Opacarb A40 (Specialty Minerals Inc.) (Particle size D₅₀ 0.4 µm, density 2.8 g/ml, and BET surface area 12 m²/g) was used.
The content of Dispex N40 was 0.05 wt% per pigment weight and no fatty acid or other surfactant were added. The coating and analysis were performed as in Example 8. For this formulation the contact angle was 71° and the normalized stain size was 2.1. Water droplets (9 µl) did not show rolling at any inclination.

## Claims

1. An aqueous dispersion to be used in the manufacture of a hydrophobic coating, wherein said aqueous dispersion comprises:
a) inorganic particles
b) at least one fatty acid or a salt thereof,
c) a polymeric binder, and
d) water.

2. The aqueous dispersion according to claim 1, wherein said aqueous dispersion comprises:
a) from about 20 to about 55 wt% of inorganic particles,
b) from about 0.1 to about 2 wt% of at least one fatty acid or a salt thereof
c) from about 5 to about 20 wt% of a polymeric binder, and
d) the rest being water and optional additives.

3. The aqueous dispersion according to any one of claims 1 to 2, wherein said inorganic particles comprise at least one substance selected from the group consisting of calcium carbonate and kaolin.

4. The aqueous dispersion according to any one of claims 1 to 3, wherein said inorganic particles comprise at least one substance selected from the group consisting of anatase, calcinated clay, kaolin, and talc, the surface of which has been made basic.

5. The aqueous dispersion according to any one of claims 1 to 4, wherein said inorganic particles comprise at least one substance selected from the group consisting of aluminium hydroxide, aragonite, barium sulphate, calcite, calcium sulphate, dolomite, magnesium hydroxide, magnesium carbonate, magnesite, titanium dioxide (rutile), and vaterite.

6. The aqueous dispersion according to any one of claims 1 to 5, wherein said inorganic particles comprise at least one substance selected from the group consisting of zincite, corundum, hematite, magnetite, ilmenite, and cassiterite.

7. The aqueous dispersion according to any one of claims 1 to 6, wherein said inorganic particles comprise at least one substance selected from the group consisting of dispore, boehmite, goethite, lepidocrocite, rhodocrosite, siderite, baryte, strontianite, apatite, feldspar and fluorite.

8. The aqueous dispersion according to any one of claims 1 to 7, wherein said inorganic particles comprise SiO₂.

9. The aqueous dispersion according to any one of claims 1 to 8, wherein said inorganic particles have an apparent density from about 0.30 g/ml to about 4 g/ml.

10. The aqueous dispersion according to any one of claims 1 to 9, wherein said inorganic particles have a BET specific surface area from about 1 m²/g to about 20 m²/g.

11. The aqueous dispersion according to any one of claims 1 to 10, wherein said inorganic particles have a D₅₀ of less than 20 µm.

12. The aqueous dispersion according to any one of claims 1 to 11, wherein said fatty acid or salt thereof has 8 to 22 carbon atoms.

13. The aqueous dispersion according to any one of claims 1 to 12, wherein said fatty acid is selected from the group consisting of oleic acid, stearic acid and palmitic acid.

14. The aqueous dispersion according to any one of claims 1 to 13, wherein said fatty acid salt is a salt of a fatty acid selected from the group consisting of oleic acid, stearic acid and palmitic acid.

15. The aqueous dispersion according to any one of claims 1 to 14, wherein said polymeric binder is selected from the group consisting of a carboxylated latex, a styrene-butadiene latex and a styrene acrylate.

16. The aqueous dispersion according to any one of claims 1 to 15, wherein said aqueous dispersion further comprises other surfactants.

17. The aqueous dispersion according to claim 16, wherein said surfactant is selected from the group consisting of phosphoric acid alkyl ester and diphosphonate surfactants or salts thereof, silicone based surfactants and fluorosurfactants.

18. The aqueous dispersion according to any one of claims 1 to 17 further comprising at least one additive selected from the group consisting of antioxidants, biocides, coalescence agents, coloured inorganic particles, crosslinkers, defoaming agents, dyes, coalescence agents, fungicides, lubricants, optical brighteners, rheology modifiers, or any combination thereof.

19. A method for preparing an aqueous dispersion according to any one of claims 1 to 18 comprising the step of mixing an aqueous dispersion of a polymeric binder with a mixture of inorganic particles and at least one fatty acid or a salt thereof.

20. The method according to claim 19, wherein said mixture of inorganic particles and at least one fatty acid or a salt thereof is prepared by
a) mixing said at least one fatty acid or a salt thereof with water,
b) mixing said inorganic particles with water, and then
c) mixing the mixtures from step a) and step b).

21. The method according to claim 19, wherein said mixture of inorganic particles and at least one fatty acid or a salt thereof is prepared by
a) mixing at least one fatty acid or a salt thereof with water and then
b) mixing the mixture from step a) with said inorganic particles.

22. The method according to any one of claims 20 to 21, wherein said polymeric binder is mixed with said inorganic particles at least 15 minutes after the mixing of said at least one fatty acid or a salt thereof with said inorganic particles.

23. The method according to any one of claims 19 to 22, further comprising a step of making non-basic inorganic particles basic.

24. The method according to claim 23, wherein said inorganic particles are contacted with at least one hydrolysable polyvalent metal salt, followed by neutralisation.

25. A method for coating a substrate comprising contacting said substrate with an aqueous dispersion according to any one of claims 1 to 18.

26. The method according to claim 25, wherein said substrate further is heated after contacting said substrate with said aqueous dispersion.

27. The method according to any one of claims 25 to 26, wherein said method comprises at least one method selected from the group consisting of spray coating, dip coating, roll application, free jet application, blade metering, rod metering, metered film press coating, air knife coating, curtain coating, flexography printing, roll coating, and powder coating.

28. A subject coated according to any one of claims 25 to 27, wherein said subject is highly hydrophobic.

29. The subject according to claim 28, wherein said subject is superhydrophobic.
